# EUROPÄISCHE PATENTSCHRIFT

(11) **EP 3 699 074 B1**
(45) Veröffentlichungstag und Bekanntmachung des Hinweises auf die Patenterteilung: **02.06.2021**
(21) Anmeldenummer: 20152259.6
(22) Anmeldetag: 16.01.2020
(51) Int. Cl.: B62K 25/28, B62K 25/00

(54) **EINARMSCHWINGE FÜR EIN MOTORRAD**
SUPPORT ARM FOR A MOTORCYCLE
MONOBRAS POUR MOTOCYCLETTE

(30) Priorität: 21.02.2019 DE 102019104462
(43) Veröffentlichungstag der Anmeldung: 26.08.2020
(73) Patentinhaber: KTM AG, 5230 Mattighofen (AT)
(72) Erfinder: SEGER, Olaf, 83410 Laufen (DE)
(74) Vertreter: Söllner, Udo

(56) Entgegenhaltungen:
- EP-A1- 0 291 369
- DE-A1-102014 016 455
- JP-A- 2016 107 929
- US-A1- 2016 318 573

## Beschreibung

Die vorliegende Erfindung betrifft eine Einarmschwinge für ein Motorrad mit einem Zugmittel zum Antrieb eines Hinterrads des Motorrads, nach dem Oberbegriff des Anspruchs 1.

Anhand der DE 102 32 892 A1 ist eine Einarmschwinge für ein Motorrad mit einem Kardanantrieb bekannt geworden. Diese Einarmschwinge weist ein Schwingengehäuse auf, welches zur Aufnahme des Kardanantriebs ausgebildet ist.

Anhand der US 2006/0137928 A1 ist eine Einarmschwinge bekannt geworden, welche zur Verwendung mit einem Motorrad vorgesehen ist, welches ein Zugmittel in der Form einer Antriebskette zum Antrieb des Hinterrads des Motorrads besitzt. Bei diesem bekannten Motorrad verläuft der Schwingenarm der Einarmschwinge zwischen dem Lasttrum und dem Leertrum der Antriebskette.

Eine ähnliche Konfiguration ist auch anhand der US 7,121,570 B2 bekannt geworden.

Auch anhand der US 4,794, 998 A ist eine Einarmschwinge mit einem Schwingenarm bekannt geworden, welcher zwischen dem Lasttrum und dem Leertrum der Antriebskette angeordnet ist.

In der EP 0 291 369 A1 ist eine Einarmschwinge mit den Merkmalen der Präambel von Anspruch 1 offenbart.

Schließlich ist auch anhand der Anmelderin bereits eine Einarmschwinge für ein Motorrad mit einem Zugmittel in der Form einer Antriebskette bekannt geworden, welche einen ersten Abschnitt zur drehbar gelagerten Aufnahme des Hinterrads und zweite Abschnitte zur verschwenkbaren Festlegung der Einarmschwinge an einem Strukturbauteil des Motorrads besitzt.

Bei dieser bekannten Einarmschwinge spannen geometrische Mittelpunkte des ersten Abschnitts und der zweiten Abschnitte eine virtuelle, insbesondere horizontal angeordnete Schwingenmittenebene auf und zwischen dem ersten und den zweiten Abschnitten ist ein eine Oberseite aufweisender Schwingenarm vorgesehen, der einen ersten Seitenwandbereich und einen diesem weitgehend gegenüberliegenden zweiten Seitenwandbereich aufweist und sich der zweite Seitenwandbereich bis in den Bereich eines zweiten Abschnitts erstreckt und die beiden Seitenwandbereiche mit einem zum Durchtritt des Zugmittels ausgebildeten Versteifungsgurt verbunden sind.

Diese bekannte Einarmschwinge zeichnet sich daher dadurch aus, dass der Versteifungsgurt von der Oberseite des Schwingenarms ausgeht, also einen Oberzuggurt darstellt.

Obwohl sich diese bekannte Einarmschwinge in der Praxis bereits bewährt hat, besitzt sie dennoch Potenzial für Verbesserungen.

Eine Einarmschwinge eines Motorrads wird je nach Fahrsituation einem komplexen Lastkollektiv ausgesetzt, einen wesentlichen Anteil zum Lastkollektiv tragen dabei Torsionsbelastungen bei.

Die bekannte Einarmschwinge ist im Bereich der zweiten Abschnitte an einem Strukturbauteil des Motorrads verschwenkbar festgelegt, und von den zweiten Abschnitten ausgehend erstreckt sich der Schwingenarm in Richtung zum ersten Abschnitt, an dem das Hinterrad drehbar gelagert aufgenommen ist.

Das Hinterrad stützt sich über einen Reifen auf der Fahrbahnoberfläche ab, sodass es aufgrund der Reifenaufstandskraft an der Fahrbahnoberfläche zu einer Gegenkraft kommt, welche den Schwingenarm auf Torsion belastet, da die Gegenkraft am Schwingenarm außermittig angreift.

Über den Reifen werden auch Seitenkräfte übertragen, welche den Schwingenarm ebenfalls auf Torsion belasten.

Die Torsionsbelastungen können sich additiv überlagern, was dazu führt, dass der Schwingenarm mit einem hohen Torsionsmoment beaufschlagt wird und daraus hohe Torsionsspannungen im Gefüge des mittels eines Gießverfahrens bereitgestellten Schwingenarms entstehen.

An der bekannten Einarmschwinge ist ein Federdämpferelement im Bereich der Oberseite des Schwingenarms angelenkt. Das Federdämpferelement oder Federbein ist dabei an der Oberseite des Schwingenarms direkt angelenkt, d. h. ohne eine Hebelübersetzung oder Umlenkung zwischen dem Anlenkpunkt und dem Federbein. Das Hinterrad folgt bei der Fahrt des Motorrads den Bodenunebenheiten, sodass es zu einer Relativbewegung des Hinterrads zu einem Bezugspunkt des Motorrads kommt, es findet also eine Radbewegung oder ein Radhub oder eine Einfederbewegung statt, die je nach dem Typ des Motorrads einen unterschiedlichen Betrag aufweist, der bei für die Fahrt auf befestigten Straßen vorgesehenen Motorrädern beispielsweise im Bereich von 100 mm bis 180 mm betragen kann.

Der Radhub des Hinterrads führt zu einer Bewegung des Arbeitskolbens des Federdämpferelements im Arbeitszylinder und so zu einem Federbeinhub. Das Verhältnis des Federbeinhubs zum Radhub ändert sich in Abhängigkeit vom Betrag des Radhubs in nichtlinearer Weise. Aus Komfortgründen wird eine progressive Auslegung angestrebt, da eine solche Auslegung zu einem progressiv steigenden Federbeinhub führt und auf diese Weise durch den zunehmenden Weg des Arbeitskolbens eine feinfühlige Einstellung der vom Arbeitskolben geleisteten Dämpferarbeit möglich ist durch die Verwendung von Federscheiben oder Shims mit vergleichsweise niedriger Federsteifigkeit.

Ausgehend hiervon liegt der vorliegenden Erfindung die Aufgabe zugrunde, die Einarmschwinge derart weiterzubilden, dass die Eigenmasse der Einarmschwinge verringert werden kann und die auf die Einarmschwinge wirkende Torsionsbelastung reduziert werden kann. Auch soll nach einem weiteren Aspekt die Progression eines an der zu schaffenden Einarmschwinge angelenkten Federdämpferelements erhöht werden können.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft eine Einarmschwinge für ein Motorrad mit einem Zugmittel zum Antrieb eines Hinterrads des Motorrads, wobei die Einarmschwinge einen ersten Abschnitt zur drehbar gelagerten Aufnahme des Hinterrads und zweite Abschnitte zur verschwenkbaren Festlegung der Einarmschwinge an einem Strukturbauteil des Motorrads besitzt, wobei geometrische Mittelpunkte des ersten Abschnitts und der zweiten Abschnitte eine virtuelle Schwingenmittenebene aufspannen und zwischen dem ersten und den zweiten Abschnitten ein eine Oberseite aufweisender Schwingenarm vorgesehen ist, der einen ersten Seitenwandbereich und einen diesem weitgehend gegenüberliegenden zweiten Seitenwandbereich aufweist und sich der zweite Seitenwandbereich bis in den Bereich eines zweiten Abschnitts erstreckt und die beiden Seitenwandbereiche mit einem zum Durchtritt des Zugmittels ausgebildeten Versteifungsgurt verbunden sind und sich der Versteifungsgurt bis in einen Bereich unterhalb der Schwingenmittenebene erstreckt.

Die erfindungsgemäße Einarmschwinge zeichnet sich also dadurch aus, dass sich der erfindungsgemäß vorgesehene Versteifungsgurt bis in einen Bereich unterhalb der Schwingenmittenebene erstreckt.

Die Schwingenmittenebene ist eine virtuelle Ebene, welche von den geometrischen Mittelpunkten des ersten Abschnitts zur drehbaren Lagerung des Hinterrads des Motorrads und von den zweiten Abschnitten zur verschwenkbaren Festlegung der Einarmschwinge an einem Strukturbauteil des Motorrads aufgespannt wird.

Bei dem Strukturbauteil kann es sich beispielsweise um einen Rahmen oder eine Rahmenkomponente oder eine Rahmenbaugruppe des Motorrads handeln, es kann sich auch um den Antriebsmotor des Motorrads oder auch beispielsweise um ein Getriebegehäuse oder ein anderes Strukturbauteil des Motorrads handeln, an dem die Einarmschwinge über die beiden zweiten Abschnitte verschwenkbar festgelegt wird.

Die Schwingenmittenebene wird also von diesen drei geometrischen Mittelpunkten aufgespannt und kann relativ zu einer Fahrbahnoberfläche oder einem Horizont oder einer Radaufstandsebene so ausgerichtet verlaufen, dass sie horizontal verläuft, also beispielsweise parallel zur Fahrbahnoberfläche.

Bezogen auf eine solche Schwingenmittenebene erstreckt sich der Versteifungsgurt nicht, wie dies bei der bekannten Einarmschwinge der Fall ist, in einen Bereich oberhalb der Schwingenmittenebene, sondern in einen Bereich unterhalb der Schwingenmittenebene, was zu wesentlichen Vorteilen führt. Bei der erfindungsgemäßen Einarmschwinge befindet sich daher der Versteifungsgurt relativ zur Hochachsrichtung des in bestimmungsgemäßer Weise an der Fahrbahnoberfläche oder Radaufstandsfläche angeordneten Motorrads näher an der Fahrbahnoberfläche oder Radaufstandsfläche, als dies bei der bekannten Einarmschwinge der Fall ist. Der lichte Abstand zwischen der Fahrbahnoberfläche oder Radaufstandsfläche und dem in Hochachsrichtung tiefsten Punkt des Versteifungsgurts ist bei der erfindungsgemäßen Einarmschwinge also kleiner als der lichte Abstand zwischen der Fahrbahnoberfläche oder Radaufstandsfläche und dem tiefsten Punkt der bekannten Einarmschwinge.

Die Anordnung des Versteifungsgurt unterhalb der Schwingenmittenebene führt verglichen mit der bekannten Einarmschwinge zu einer Verlagerung von Torsionsspannungen aufnehmendem Werkstoff der Einarmschwinge in den Bereich unterhalb der Schwingenmittenebene.

Dies wiederum führt zu einer Absenkung des Schubmittelpunkts des Schwingenarms der Einarmschwinge verglichen mit dem Schubmittelpunkt des Schwingenarms der bekannten Einarmschwinge und somit zu einer Verringerung des Hebelarms, über den die am Hinterrad angreifende Seitenkraft ein Torsionsmoment auf den Schwingenarm aufbauen kann.

Wird also bei einer Fahrt mit dem Motorrad mit der bekannten Einarmschwinge und der erfindungsgemäßen Einarmschwinge eine zu Referenzzwecken jeweils als gleich angenommene Seitenkraft aufgebaut, so führt dies bei der bekannten Einarmschwinge zu einem höheren, die Einarmschwinge beaufschlagenden Torsionsmoment als bei der erfindungsgemäßen Einarmschwinge und demgemäß treten im Gefüge beziehungsweise Werkstoff des Schwingenarms der bekannten Einarmschwinge höhere Torsionsbelastung auf als im Schwingenarm der erfindungsgemäßen Einarmschwinge.

Bei dem Schwingenarm der erfindungsgemäßen Einarmschwinge handelt es sich um ein Hohlbauteil mit einer angestrebten Werkstoffverteilung im Randfaserbereich des Hohlbauteils zur Aufnahme von Torsionsspannungen.

Durch die Reduzierung der Torsionsbelastung der erfindungsgemäßen Einarmschwinge treten verglichen mit der bekannten Einarmschwinge niedrigere Torsionsbelastungen im Randfaserbereich auf, sodass die Werkstoffverteilung des Schwingenarms der erfindungsgemäßen Einarmschwinge derart gestaltet werden kann, dass die Wandstärke verringert wird und somit auch die Eigenmasse der Einarmschwinge verringert werden kann. Damit wiederum wird der Einfluss der Massenkräfte der erfindungsgemäßen Einarmschwinge auf das Motorrad verringert und somit ein Zuwachs an Fahrdynamik erzielt.

Dadurch, dass die Integration des Versteifungsgurts in den Schwingenarm der erfindungsgemäßen Einarmschwinge in den Bereich unterhalb der Schwingenmittenebene stattfindet, wird darüber hinaus eine versteifte Anbindungsfläche am Schwingenarm bereitgestellt, welcher zur Aufnahme eines Federdämpferelements des Motorrads genutzt werden kann, da sich die auf das Federdämpferelement wirkenden Kräfte an der so bereitgestellten Anbindungsfläche abstützen und somit durch die Integration des Versteifungsgurts in den Bereich unterhalb der Schwingenmittenebene eine Funktionsintegration erzielt wird, nämlich einerseits eine Verteilung des Werkstoffs zur Bildung des Schwingenarms in einem Bereich nahe der Radaufstandsfläche, wodurch der Schubmittelpunkt abgesenkt wird und andererseits die Bereitstellung einer Anbindungsfläche für das Federdämpferelement im größeren Abstand zum oberen Federbeinauge, an dem das Federdämpferelement an einem Strukturbauteil des Motorrads abgestützt wird, wodurch die Möglichkeit bereitgestellt wird, eine Hebelumlenkung zu integrieren, an dem das Federdämpferelement abgestützt werden kann, mit der wiederum die Gesamtprogression der Federdämpferkinematik in Verbindung mit der erfindungsgemäßen Einarmschwinge verglichen mit der bekannten Einarmschwinge wesentlich erhöht werden kann und somit auch ein Komfortgewinn erzielbar ist.

Auf diese Weise kommt es zu einer Gefügeversteifung im Schwingenarm unterhalb der Schwingenmittenebene, die sowohl zur Senkung des Schubmittelpunkts und damit aufgrund der Reduzierung der Hebelarmlänge zu einer Verringerung der im Torsionsfall im Schwingenarm auftretenden Torsionsspannungen beiträgt und darüber hinaus die Integration einer Hebelumlenkung in das Federdämpfersystem des Hinterrads ermöglicht.

Es ist einer Weiterbildung der Erfindung auch vorgesehen, dass der Schwingenarm eine sich vom ersten Abschnitt in Richtung zum zweiten Abschnitt in einer gekrümmten Konfiguration erstreckende Ausbildung aufweist und die Oberseite eine weitgehend parallel zur Schwingenmittenebene angeordnete obere Deckseitenwand aufweist.

Wie bereits vorstehend erwähnt, trägt die Integration des Versteifungsgurts in den Aufbau der erfindungsgemäßen Einarmschwinge unterhalb der Schwingenmittenebene dazu bei, dass die Torsionssteifigkeit der Einarmschwinge unterhalb der Schwingenmittenebene deutlich ansteigt. Die Ausbildung der oberen Deckseitenwand als weitgehend eben, flach ausgebildete Deckseitenwand verhindert die Materialanhäufung in einem oberen Bereich beabstandet zur Schwingenmittenebene, wodurch nämlich der Absenkung des Schubmittelpunkts entgegengewirkt werden würde.

Es ist nach einer Weiterbildung der Erfindung auch vorgesehen, dass der Schwingenarm eine zumindest abschnittsweise im Winkel zur Schwingenmittenebene verlaufende Unterseitenwand aufweist, welche zumindest abschnittsweise mit dem Versteifungsgurt verbunden ist.

Diese Konfiguration sorgt dafür, dass ein Torsionsspannungen aufnehmender Werkstoff unterhalb der Schwingenmittenebene konzentriert wird und zwar in einem Bereich, der mit dem Versteifungsgurt verbunden ist, wodurch die Torsionssteifigkeit des Profils durch eine Erhöhung des Widerstandsmoments gegen Torsion erhöht wird und es somit möglich ist, die Wandstärke der Hohlprofilstruktur zur Bildung des Schwingenarms zu verringern und damit die Eigenmasse der erfindungsgemäßen Einarmschwinge verringert werden kann.

Es ist nach einer Weiterbildung der Erfindung auch vorgesehen, dass die beiden zweiten Abschnitte im lichten Abstand zueinander angeordnet sind und einen Zwischenraum ausbilden und sich ein Verbindungsabschnitt von einem ersten der beiden zweiten Abschnitte in Richtung zu dem zweiten der beiden zweiten Abschnitte erstreckt und der Verbindungsabschnitt vom jeweiligen zweiten Abschnitt ausgehend einen jeweiligen Armabschnitt besitzt und die Armabschnitte mittels eines gekrümmt verlaufenden Abschnitts miteinander verbunden sind und der gekrümmt verlaufende Abschnitt den Zwischenraum mit einer den beiden zweiten Abschnitten zugewandten Vorderseitenwand begrenzt.

Diese Konfiguration sorgt dafür, dass zwischen den beiden zweiten Abschnitten, mit denen die erfindungsgemäße Einarmschwinge an dem vorstehend bereits genannten Strukturbauteil des Motorrads verschwenkbar festgelegt wird, ein als Aufnahmeraum zur Integration eines Federdämpferelements in den Aufbau der erfindungsgemäßen Einarmschwinge dienender Zwischenraum ausgebildet werden kann. Auf diese Weise kann das Federdämpferelement den Zwischenraum durchsetzen und sich ein unteres Auge des Federdämpferelements an der Anbindungsfläche im Bereich der Unterseite der erfindungsgemäßen Einarmschwinge abstützen und zwar unter Zwischenschaltung einer Hebelkinematik, mit der die Gesamtprogression vergrößert werden kann und sich ein oberes Auge des Federdämpferelements durch den Zwischenraum hindurch in Richtung nach oben erstrecken, um an einer Anbindungsfläche des Strukturbauteils lösbar festgelegt zu werden.

Es ist nach einer Weiterbildung der Erfindung auch vorgesehen, dass ein dem zweiten Seitenwandbereich zugeordneter Armabschnitt eine obere Deckseitenwand aufweist, welche weitgehend parallel zur Schwingenmittenebene angeordnet ist und eine sich in Richtung zum Schwingenarm in einer Draufsichtansicht erweiternde Konfiguration besitzt.

Die zur Schwingenmittenebene weitgehend parallele Ausgestaltung der oberen Deckseitenwand sorgt dafür, dass es nicht zu einer unerwünschten Verschiebung des Schubmittelpunkts in Richtung nach oben kommt und durch die sich in Richtung zum Schwingenarm erweiternde Konfiguration des Armabschnitts wird eine dem am Armabschnitt angreifenden Lastkollektiv gerecht werdende Konfiguration erzielt, da in dem Bereich des sich an den Armabschnitt anschließenden Zwischenraum auch Zugspannungen überlagert werden, welche über das an der Unterseite der Einarmschwinge angeordnete Federbeinanbindungsauge eingetragen werden.

Es ist nach einer Weiterbildung der Erfindung auch vorgesehen, dass der erste Seitenwandbereich eine sich von dem ersten Abschnitt in Richtung zu einem zweiten Abschnitt erstreckende Außenseitenwand aufweist, welche weitgehend eben ausgebildet ist und der Schwingenarm vom zweiten Abschnitt ausgehend eine sich in Richtung zum Verbindungsabschnitt querschnittlich erweiternde Konfiguration aufweist.

Die erfindungsgemäße Einarmschwinge kann in bevorzugter Weise mittels eines Gießverfahrens hergestellt werden, und die weitgehend ebene Ausgestaltung der Außenwand sorgt dafür, dass dieser Bereich der Einarmschwinge mittels eines seitlichen Schiebers im Gießwerkzeug dargestellt werden kann und somit der Aufwand an mechanischer Nachbearbeitung der dem Gießwerkzeug entnommenen Schwinge reduziert werden kann und die sich in Richtung zum Verbindungsabschnitt querschnittlich erweiternde Konfiguration des Schwingenarms vom zweiten Abschnitt ausgehend sorgt für eine dem den Schwingenarm beaufschlagenden Lastkollektiv entsprechende Ausgestaltung.

Es ist nach einer Weiterbildung der Erfindung auch vorgesehen, dass der Schwingenarm vom ersten Abschnitt ausgehend in Richtung zum Verbindungsabschnitt in einer Draufsichtansicht eine sich erweiternde Konfiguration aufweist, wodurch eine dem den Schwingenarm beaufschlagenden Lastkollektiv entsprechende Ausgestaltung erzielt wird und darüber hinaus die Anhäufung an Werkstoff oder Material zur Ausbildung der erfindungsgemäßen Einarmschwinge oberhalb der Schwingenmittenebene vermieden wird.

Es ist nach einer Weiterbildung der Erfindung auch vorgesehen, dass der zweite Seitenwandbereich einen sich vom zweiten Abschnitt ausgehend weitgehend im rechten Winkel zur Oberseite nach unten gerichtet erstreckenden Wandabschnitt aufweist, welcher im unteren Endbereich mit dem Versteifungsgurt einstückig verbunden ist und in Richtung zum zweiten Abschnitt eine gekrümmte Konfiguration aufweist.

Diesem Wandabschnitt wird von der Anbindungsfläche des Federdämpferelements ausgehend eine über das Federdämpferelement in das Lastkollektiv eingetragener Zugspannungsanteil überlagert und die Konfiguration des Wandabschnitts weitgehend im rechten Winkel zur Oberseite nach unten gerichtet verlaufend sorgt dafür, dass dieser Zugspannungsanteil mit geringer Wandstärke in diesem Profilbereich aufgenommen werden kann.

Es ist nach einer Weiterbildung der Erfindung auch vorgesehen, dass der Verbindungsgurt vom ersten Seitenwandbereich ausgehend eine sich in Richtung zu einer axialen Längsmittenebene der Einarmschwinge erstreckende Konfiguration aufweist und der Verbindungsgurt mit einem der Oberseite des Schwingenarms gegenüber liegenden unteren Wandbereich der Einarmschwinge einstückig ausgebildet ist.

Diese Konfiguration sorgt dafür, dass die Unterseite der Schwinge versteift wird hinsichtlich der vom Hinterrad des Motorrads über die resultierende Seitenkraft in das Profil der Einarmschwinge eingeleiteten Torsionsbelastung und der Schubmittelpunkt in den Bereich unterhalb der Schwingenmittenebene verlagert wird. Dadurch wird eine torsionssteife Konfiguration der Einarmschwinge erzielt und es wird ermöglicht, die Eigenmasse der Einarmschwinge durch eine entsprechende Verringerung der Wandstärke des Hohlprofils des Schwingenarms zu verringern und eine die Torsionsspannungen aufnehmende Materialverlagerung in den Bereich der Last aufnehmenden Außenfasern des Schwingenarms beziehungsweise der Einarmschwinge erzielt.

Wie es vorstehend bereits erwähnt wurde, zeichnet sich die erfindungsgemäße Einarmschwinge unter anderem dadurch aus, dass sie einen unterhalb der Schwingenmittenebene liegenden Schubmittelpunkt besitzt und auch dadurch, dass die Einarmschwinge an einem der Oberseite gegenüberliegenden Unterseitenbereich eine mit der Einarmschwinge einstückig ausgebildete Aufnahme zur lösbaren Festlegung der bereits erwähnten Federdämpfereinrichtung aufweist.

Es ist nach einer Weiterbildung der Erfindung vorgesehen, dass sich die zur lösbaren Festlegung der Federdämpfereinrichtung vorgesehene Aufnahme von der Schwingenmittenebene aus betrachtet in Richtung nach unten erstreckt, also in einen Bereich, der einerseits im Bereich der Randaußenfasern der Struktur der Einarmschwinge liegt und damit in einem Torsionsbelastungen aufnehmenden Bereich und andererseits die Anordnung der Aufnahme unterhalb der Schwingenmittenebene eine Verstärkung der lastaufnehmenden Struktur der Einarmschwinge bewirkt, wobei die Einbindung der Aufnahme in die Last aufnehmende Struktur ohne Kerbspannungen verursachende sanfte und abgerundete Übergänge stattfindet. Dadurch wird auch den Zugspannungen in das Lastkollektiv im Bereich der Aufnahme für die Federdämpfereinrichtung eintragenden Anordnung Rechnung getragen.

Es ist nach einer Weiterbildung der Erfindung auch vorgesehen, dass die Aufnahme einen in Richtung einer Längsmittenachse der Einarmschwinge ausgerichteten Vorderseitenbereich aufweist, welcher einen näherungsweise tangentialen Übergang zur Vorderseitenwand des Zwischenraums besitzt. Diese näherungsweise tangentiale Ausbildung der Aufnahme im Bereich der Vorderseitenwand des Zwischenraums sorgt dafür, dass die vorstehend erwähnten Zugkräfte, die über das Federdämpferelement in das Lastkollektiv eingetragen werden, als Zugspannungen in den Vorderseitenwandbereich des Zwischenraums eingetragen werden und somit nicht zu einer Erhöhung der Torsionsspannungen in diesem Bereich führen.

In hierzu ähnlicher Weise ist es nach einer Weiterbildung der Erfindung auch vorgesehen, dass die Aufnahme einen in Richtung einer Längsmittelachse der Einarmschwinge ausgerichteten Rückseitenbereich aufweist, welcher tangential oder weitgehend tangential in eine dem Zwischenraum gegenüberliegende Rückseitenwand der Einarmschwinge übergeht.

Ähnlich wie es vorstehend bereits erwähnt wurde, werden die in die Aufnahme des Federdämpferelements eingetragenen Zugkräfte auch am Rückseitenbereich auf diese Weise weitgehend torsionspannungsfrei als reine Zugkräfte in die Rückseitenwand eingetragen, wodurch die durch die Abstützung des Federdämpferelements an der Aufnahme wirkenden Kräfte die Torsionsbelastung der erfindungsgemäßen Einarmschwinge nicht erhöhen.

Hierzu trägt auch bei, dass die Einarmschwinge im Bereich der Rückseitenwand in Richtung der Längsmittelachse der Einarmschwinge betrachtet eine V-förmige Konfiguration aufweist, also die in die Aufnahme eingetragenen Kräfte weitgehend als Zugkräfte in das Lastkollektiv eingehen.

Schließlich sieht die Erfindung auch ein Motorrad vor mit einem Vorderrad und einem Hinterrad und einer Einarmschwinge, wie sie vorstehend beschrieben worden ist.

Die Erfindung wird im Folgenden anhand der Zeichnung näher erläutert. Diese zeigt in:
Fig. 1 eine teilweise Seitenansicht eines Motorrads mit der bekannten Einarmschwinge;
Fig. 2 eine Seitenansicht der bekannten Einarmschwinge mit einer Schwingenmittenebene und der Lage des Schubmittelpunkts der bekannten Einarmschwinge;
Fig. 3 eine Vergleichsansicht der bekannten Einarmschwinge mit der Lage des Schubmittelpunkts und der Einarmschwinge einer Ausführungsform gemäß der vorliegenden Erfindung mit der Lage des Schubmittelpunkts;
Fig. 4 eine perspektivische Ansicht eine Ausführungsform der erfindungsgemäßen Einarmschwinge mit der Schwingenmittenebene;
Fig. 5 eine Darstellung ähnlich derjenigen nach der Fig. 2, die aber die erfindungsgemäße Einarmschwinge mit der Lage des Schubmittelpunkts zeigt;
Fig. 6 eine Draufsichtansicht von oben auf eine Ausführungsform der erfindungsgemäßen Einarmschwinge;
Fig. 7 eine Ansicht von vorne auf die erfindungsgemäße Einarmschwinge;
Fig. 8 eine perspektivische Vorderseitenansicht der erfindungsgemäßen Einarmschwinge;
Fig. 9 eine perspektivische Rückseitenansicht der erfindungsgemäßen Einarmschwinge;
Fig. 10 eine Seitenansicht der erfindungsgemäßen Einarmschwinge;
Fig. 11 eine Querschnittsansicht von hinten der erfindungsgemäßen Einarmschwinge zur Erläuterung des Torsionsspannungsverlaufs;
Fig. 12 eine perspektivische Schnittansicht der erfindungsgemäßen Einarmschwinge zur Erläuterung von Versteifungsrippen;
Fig. 13 eine weitere Seitenansicht der erfindungsgemäßen Einarmschwinge; und
Fig. 14 eine Seitenansicht eines schematisch dargestellten Motorrads mit der erfindungsgemäßen Einarmschwinge.

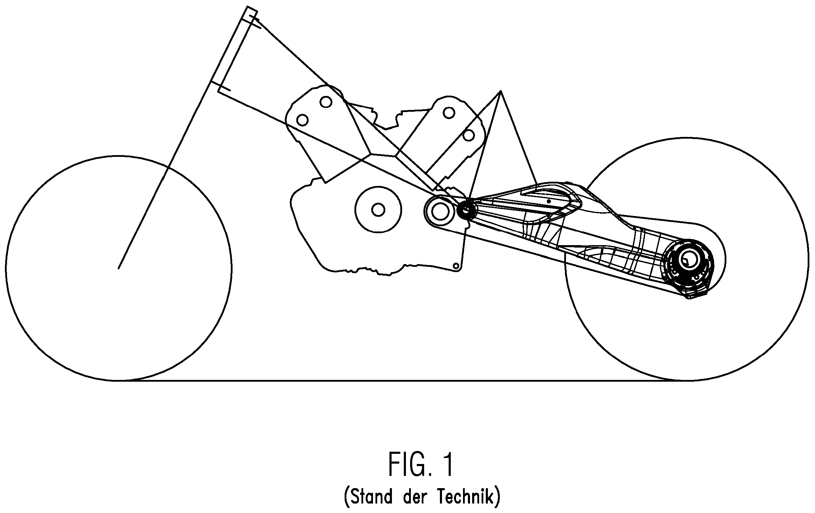

Fig. 1 der Zeichnung zeigt eine teilweise Seitenansicht eines Motorrads mit der bekannten Einarmschwinge.

Die Einarmschwinge dient der Führung des Hinterrads, welches über ein Zugmittel in der Form einer Antriebskette mit einem Antriebsritzel eines nicht näher dargestellten Gangwechselgetriebes in Verbindung steht.

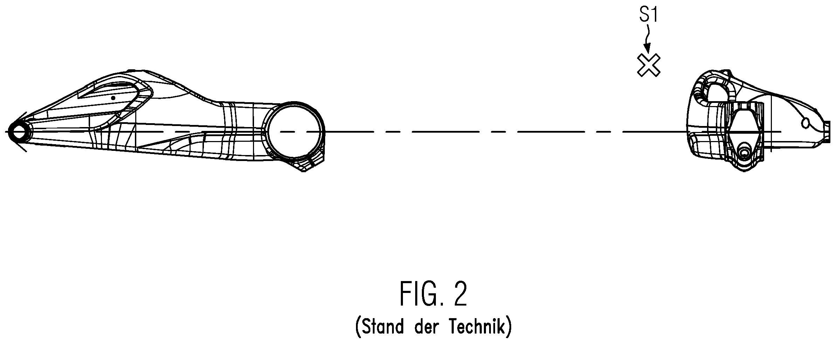

Die bekannte Einarmschwinge weist einen Durchtritt für die Antriebskette auf, wobei der Durchtritt von einem Versteifungsgurt ausgebildet wird, der oberhalb einer näher anhand von Fig. 2 der Zeichnung ersichtlichen - gestrichelt dargestellten - Schwingenmittenebene angeordnet ist.

Fig. 2 der Zeichnung zeigt, dass auch die bekannte Einarmschwinge eine Schwingenmittenebene aufspannt, welche von einem geometrischen Mittelpunkt eines ersten Abschnitts zur Aufnahme des Hinterrads des Motorrads und zwei Abschnitten zur verschwenkbaren Festlegung der Einarmschwinge an einem Strukturbauteil des Motorrads besitzt.

Wie es anhand der rechten Darstellung der Fig. 2 ersichtlich ist, befindet sich der mit "x" markierte Schubmittelpunkt der bekannten Einarmschwinge oberhalb der Schwingenmittenebene angeordnet.

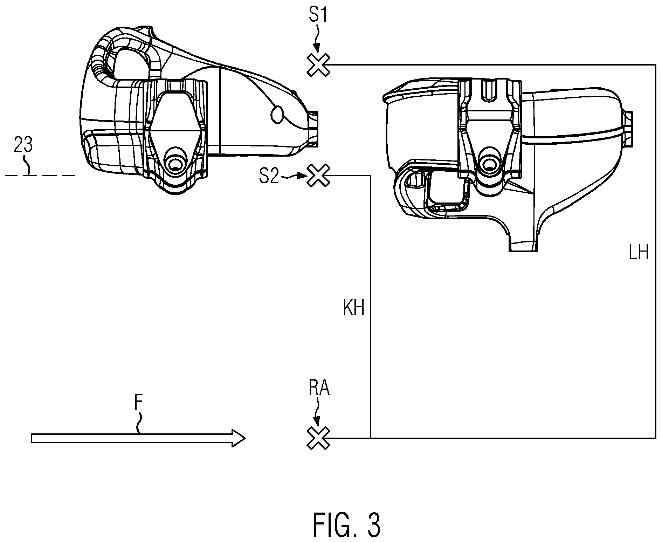

Fig. 3 der Zeichnung zeigt eine Vergleichsansicht der bekannten Einarmschwinge auf der linken Seite der Zeichnung mit der Lage des mit "x" markierten Schubmittelpunkts "S1" und der Einarmschwinge einer Ausführungsform gemäß der vorliegenden Erfindung mit der Lage des ebenfalls mit "x" markierten Schubmittelpunkts S2.

An dem mit "x" markierten Radaufstandspunkt "RA" befindet sich das Hinterrad des Motorrads mit der Fahrbahnoberfläche in Kontakt. An diesem Radaufstandspunkt wird bei einer Fahrt des Motorrads eine Seitenkraft "F" in den Aufbau des Motorrads eingetragen und zwar über die das Hinterrad führende Einarmschwinge.

Die Seitenkraft führt dabei zu einem die Einarmschwinge belastenden Torsionsmoment, welches umso höher ist, je länger der Hebelarm zwischen dem Schubmittelpunkt und dem Radaufstandspunkt ist. Ein langer Hebelarm "LH", wie dies bei der bekannten Einarmschwinge der Fall ist, führt daher zu einem vergleichsweise höheren Torsionsmoment als ein kurzer Hebelarm "KH", wie dies bei der erfindungsgemäßen Einarmschwinge der Fall ist. Je höher also der Schubmittelpunkt der Einarmschwinge über dem Radaufstandspunkt liegt, desto größer wird der Hebelarm und desto größer wird das die Einarmschwinge belastende Torsionsmoment ausgehend von einer vorgegebenen Seitenkraft.

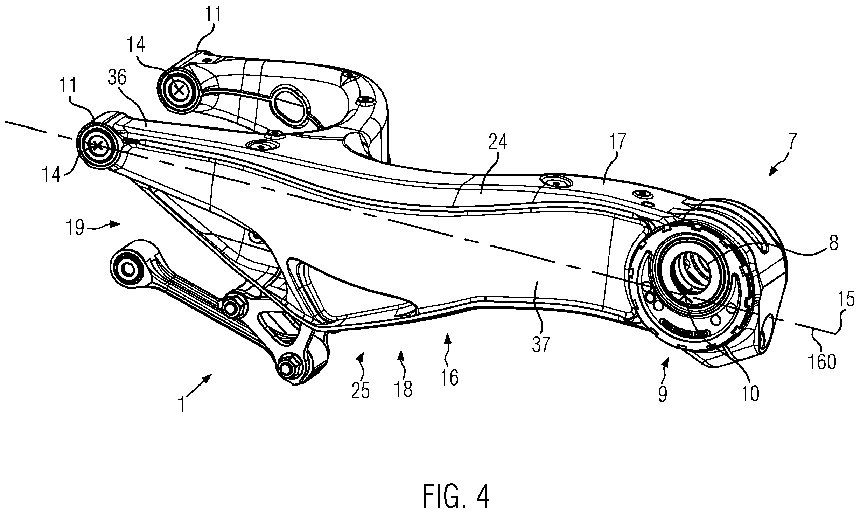

Fig. 4 der Zeichnung zeigt eine perspektivische Darstellung einer Ausführungsform einer Einarmschwinge 1 gemäß der vorliegenden Erfindung.

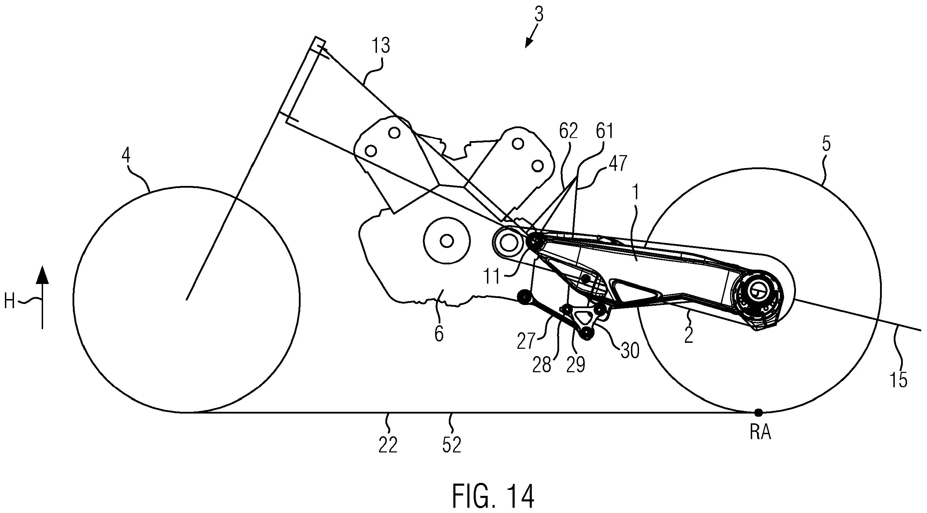

Die Einarmschwinge 1 ist zur Verwendung mit einem mit einer Kette 2 als Antriebsmittel ausgestatteten Motorrad 3 vorgesehen, wie es anhand von Fig. 14 der Zeichnung ersichtlich ist. Das Motorrad 3 weist ein Vorderrad 4 und ein Hinterrad 5 auf, welches über die erfindungsgemäße Einarmschwinge 1 geführt ist und von einem Antriebsmotor 6 über die Kette 2 angetrieben wird.

Das Hinterrad 5 ist in einem ersten Abschnitt 7 drehbar gelagert aufgenommen und zwar mittels einer nicht näher dargestellten Achse, welche die Ausnehmung 8 des ersten Abschnitts 7 durchsetzt. In der Darstellung nach Fig. 4 ist die Ausnehmung 8 in dem ersten Abschnitt 7 zur Erleichterung der Einstellung der Vorspannung der Antriebskette 2 exzentrisch angeordnet, der die Aufnahme 9 zur drehbaren Lagerung des Hinterrads 5 aufweisende erste Abschnitt weist einen geometrischen Mittelpunkt 10 auf, auf den nachfolgend noch eingegangen wird.

Wie es anhand von Fig. 4 der Zeichnung ohne weiteres ersichtlich ist, besitzt die Einarmschwinge 1 an dem, dem Endbereich mit dem ersten Abschnitt 7 gegenüberliegenden Endbereich zwei zweite Abschnitte 11, über die die Einarmschwinge 1 an einem Strukturbauteil 12 in der Form eines Rahmens 13 des Motorrads 1 verschwenkbar festgelegt werden kann.

Die zweiten Abschnitte 11 weisen jeweilige geometrische Mittelpunkte 14 auf und spannen zusammen mit dem geometrischen Mittelpunkt 10 des ersten Abschnitts 7 eine Schwingenmittenebene 15 auf, welche in Fig. 4 der Zeichnung mit der gestrichelten Linie 160 dargestellt ist.

Die Einarmschwinge 1 weist einen Schwingenarm 16 auf, der zwischen dem ersten Abschnitt 7 und den zweiten Abschnitten 11 verläuft und eine Oberseite 17 aufweist und einen ersten Seitenwandbereich 18 und einen zweiten Seitenwandbereich 19 aufweist, welche dem ersten Seitenwandbereich 18 weitgehend gegenüberliegend angeordnet ist und sich der zweite Seitenwandbereich 19 bis in den Bereich des in der Zeichnung nach Fig. 4 linken zweiten Abschnitts 11 erstreckt.

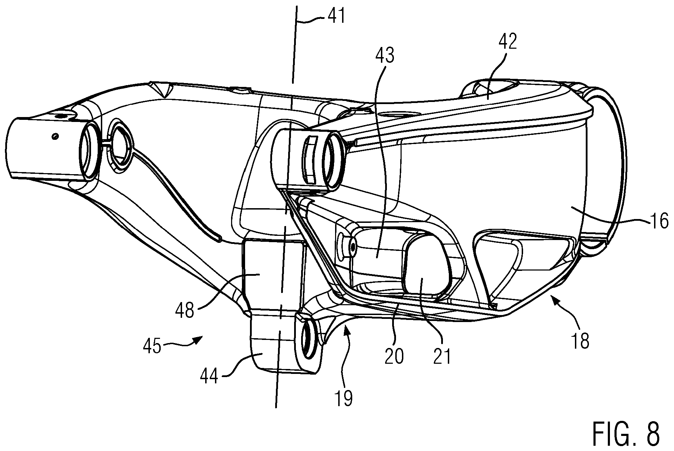

Die beiden Seitenwandbereiche 18, 19 sind mittels eines anhand von Fig. 8 der Zeichnung ersichtlichen Versteifungsgurts 20 miteinander verbunden und bilden einen Durchtritt 21 aus, durch den die Kette 2 hindurchtreten kann, wie dies anhand von Fig. 14 der Zeichnung ersichtlich ist. Die Kette 2 Durchtritt den Durchtritt 21 dabei mit dem Leertrum der Antriebskette 2.

Der Versteifungsgurt 20 ist auf diese Weise als Unterzuggurt ausgebildet, der sich vom ersten Seitenwandbereich 18 bis zum zweiten Seitenwandbereich 19 erstreckt und zwar bis in einen Bereich unterhalb der Schwingenmittenebene 15.

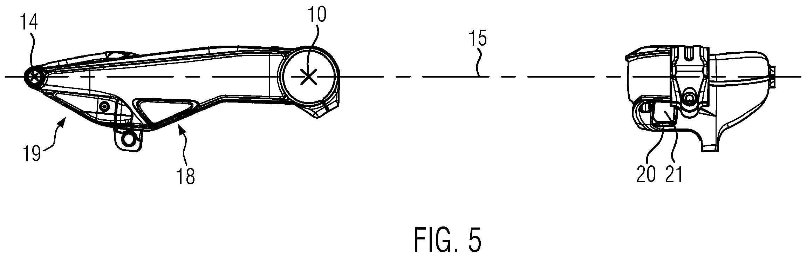

Wie es anhand von Fig. 5 der Zeichnung ersichtlich ist, wird die Schwingenmittenebene 15 von den jeweiligen Mittelpunkten 10 und 14 aufgespannt und der Versteifungsgurt 20 erstreckt sich unterhalb der Schwingenmittenebene 15 und zwar in der bestimmungsgemäßen Einbaulage am Motorrad 3, welches auf der Radaufstandsebene 52 angeordnet ist.

Wie es anhand von Fig. 14 der Zeichnung ersichtlich ist, steht das Motorrad 3 mit dem Vorderrad 4 und dem Hinterrad 5 auf der Fahrbahnoberfläche 22 auf, welche gleichzeitig die Radaufstandsebene 52 darstellt und die Schwingenmittenebene 15 verläuft im Winkel zur Fahrbahnoberfläche 22.

Fig. 14 der Zeichnung zeigt darüber hinaus eine mit "H" bezeichnete Hochachsrichtung und in Hochachsrichtung betrachtet liegt der in Fig. 3 mit "S2" gekennzeichnete Schubmittelpunkt der erfindungsgemäßen Einarmschwinge 1 unterhalb der Schwingenmittenebene 15.

Im Vergleich zu der anhand von Fig. 2 und Fig. 3 der Zeichnung ersichtlichen Lage des Schubmittelpunkts "S1" der bekannten Einarmschwinge oberhalb der Schwingenmittenebene liegt also der Schubmittelpunkt "S2" der erfindungsgemäßen Einarmschwinge 1 unterhalb der Schwingenmittenebene in der den Schubmittelpunkt "S1" aufweisenden Schubmittelpunktsebene 23, während der Schubmittelpunkt "S1" der bekannten Einarmschwinge oberhalb der Schwingenmittenebene liegt und somit eine vorbestimmte Seitenkraft bei der bekannten Einarmschwinge zu einem höheren Torsionsmoment führt als bei der erfindungsgemäßen Einarmschwinge 1.

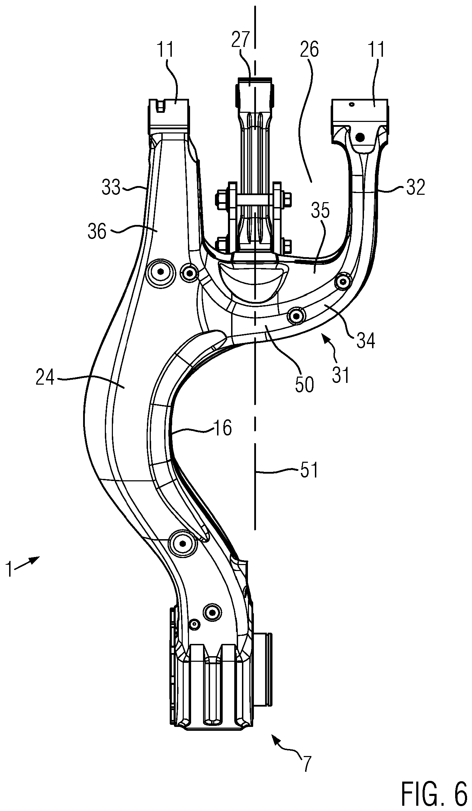

Fig. 6 der Zeichnung zeigt eine Draufsichtansicht von oben auf die erfindungsgemäße Einarmschwinge 1 gemäß der dargestellten Ausführungsform. Wie es ohne weiteres ersichtlich ist, weist der Schwingenarm 16 eine sich zwischen dem ersten Abschnitt 7 und den zweiten Abschnitten 11 mit einer gekrümmten Konfiguration erstreckende Ausbildung auf und besitzt eine obere Deckseitenwand 24, welche weitgehend parallel zur Schwingenmittenebene 15 verläuft, wie dies auch anhand von Fig. 4 der Zeichnung ersichtlich ist.

Darüber hinaus weist der Schwingenarm 16 eine Unterseitenwand 25 auf, welche sich abschnittsweise im Winkel zur Schwingenmittenebene 15 erstreckt, wie dies anhand von Fig. 4 der Zeichnung ersichtlich ist und die Unterseitenwand 25 ist abschnittsweise mit dem Versteifungsgurt 20 verbunden, wie sich dies anhand von Fig. 8 der Zeichnung ergibt.

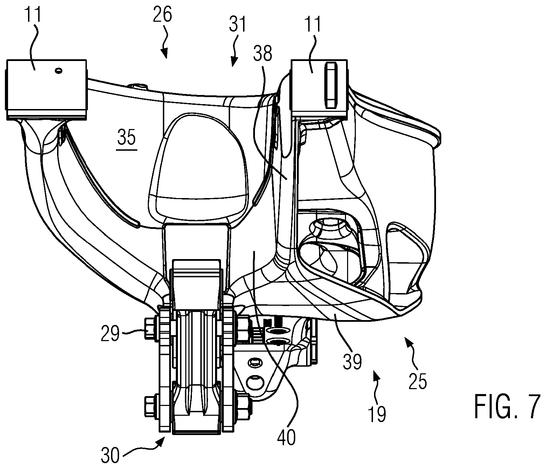

Fig. 6 und Fig. 7 der Zeichnung zeigen, dass die beiden zweiten Abschnitte 11 in einem lichten Abstand zueinander angeordnet sind und einen Zwischenraum 26 ausbilden den die näher anhand von Fig. 14 der Zeichnung ersichtliche Federdämpfereinrichtung 47 durchsetzen kann und zwar so, dass sie mit einem unteren Federbeinauge 28 an der Aufnahme 29 einer Umlenkung 30 festgelegt werden kann. Die Umlenkung 30 stützt sich dabei über einen Ausleger 27 an dem Antriebsmotor 6 des Motorrads 3 ab.

Ein Verbindungsabschnitt 31 erstreckt sich zwischen den beiden zweiten Abschnitten 11 und der Verbindungsabschnitt 31 weist einen ersten Armabschnitt 32 sowie einen zweiten Armabschnitt 33 auf und die beiden Armabschnitte 32, 33 sind über einen gekrümmt verlaufenden Abschnitt 34 miteinander verbunden, welcher den Zwischenraum 26 mit einer den beiden zweiten Abschnitten 11 zugewandten Vorderseitenwand 35 begrenzt, wie dies anhand von Fig. 6 und Fig. 7 der Zeichnung ersichtlich ist.

Wie es sich am besten anhand von Fig. 4 und Fig. 6 der Zeichnung erschließt, weist der dem in Fig. 6 der Zeichnung linken zweiten Abschnitt 11 zugeordnete zweite Armabschnitt 33 eine obere Deckseitenwand 36 auf, welche weitgehend parallel zur Schwingenmittenebene 15 angeordnet ist und eine sich in Richtung zum Schwingenarm 16 in der Draufsicht erweiternde Konfiguration besitzt.

Fig. 4 der Zeichnung zeigt, dass der erste Seitenwandbereich 18 eine sich vom ersten Abschnitt 7 in Richtung zum zweiten Abschnitt 11 erstreckende Außenseitenwand 37 besitzt, die weitgehend eben ausgebildet ist und Fig. 6 der Zeichnung zeigt in einer Ansicht von oben, dass der Schwingenarm 16 eine sich in Richtung zum Verbindungsabschnitt 31 querschnittlich erweiternde Konfiguration besitzt.

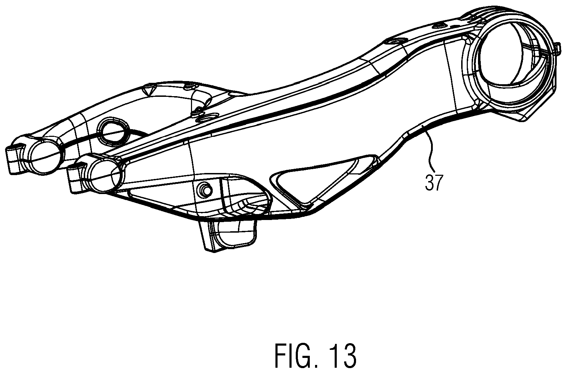

Die weitgehend ebene Konfiguration der Außenseitenwand 37 ist auch anhand von Fig. 13 der Zeichnung ersichtlich, und kann bei der erfindungsgemäßen Einarmschwinge 1, welche mittels eines Kokillengießvorgangs hergestellt werden kann, mittels eines seitlichen Schiebers des nicht dargestellten Formwerkzeugs bereitgestellt werden, und reduziert auf diese Weise den Bearbeitungsaufwand der erfindungsgemäßen Einarmschwinge 1, da eine aufwändige manuelle Bearbeitung eines Teilungsgrats der Schwinge entfällt.

Der Schwingenarm 16 weist vom ersten Abschnitt 7 ausgehend in Richtung zum Verbindungsabschnitt 31 eine sich erweiternde Konfiguration auf und trägt auf diese Weise der sich vom ersten Abschnitt 7 in Richtung zum zweiten Abschnitt 11 verändernden Torsionsbelastung Rechnung.

Wie es am besten anhand von Fig. 7 der Zeichnung ersichtlich ist, weist der zweite Seitenwandbereich 19 eine sich vom zweiten Abschnitt 11 ausgehend weitgehend im rechten Winkel zur Oberseite oder oberen Deckseitenwand 24 in Richtung nach unten gerichtet erstreckenden Wandabschnitt 38 auf, welcher im unteren Bereich 39 einstückig mit dem Versteifungsgurt 20 verbunden ist und in Richtung zum anderen zweiten Abschnitt 11 eine gekrümmte Konfiguration mit einer Fläche 40 aufweist.

Fig. 8 der Zeichnung zeigt, dass der Versteifungsgurt 20 vom ersten Seitenwandbereich 18 ausgehend eine sich in Richtung zu einer axialen Längsmittenebene 41 der Einarmschwinge 1 erstreckende Konfiguration besitzt und der Versteifungsgurt 20 mit einem der Oberseite 42 des Schwingenarms 16 gegenüberliegenden unteren Wandbereich 43 der Einarmschwinge 1 einstückig ausgebildet ist. Diese Konfiguration sorgt für einen in sich geschlossenen Profilzug zur Aufnahme von Torsionsspannungen, welche über die Radaufstandskraft und der Seitenkraft in die Einarmschwinge 1 eingetragen werden.

Die Einarmschwinge 1 besitzt eine Aufnahme 44, welche im Bereich der Unterseite 45 der Einarmschwinge 1 einstückig mit dieser ausgebildet ist und zur lösbaren Festlegung einer näher anhand von Fig. 7 der Zeichnung dargestellten Umlenkung oder Hebelumlenkung 30 vorgesehen ist, an der wiederum die anhand von Fig. 14 der Zeichnung ersichtliche Federdämpfereinrichtung 47 lösbar festgelegt werden kann.

Diese Konfiguration sorgt dafür, dass die geometrische Progression der Federbeinkinematik verglichen mit der geometrische Progression der Federbeinkinematik in Verbindung mit der bekannten Einarmschwinge wesentlich erhöht werden kann, nämlich im Vergleichsfall von einer Gesamtprogression von etwa 5 % auf etwa 19 %.

Wie es sich anhand der Figuren der Zeichnung zeigt, erstreckt sich die Aufnahme 44 von der Schwingenmittenebene 15 aus betrachtet in Richtung nach unten und weist, wie sich dies anhand von Fig. 8 der Zeichnung ergibt, am Vorderseitenbereich, also dem der Vorderseitenwand 35 des Zwischenraums 26 zugewandten Endbereich, einen weitgehend tangentialen Übergang zur Vorderseitenwand 35 auf, sodass sich die in die Aufnahme 44 eingeleiteten weitgehend als Zugkräfte darstellenden Kräfte an der Einarmschwinge 1 abstützen und die Torsionsbelastung der Einarmschwinge 1 nicht erhöhen. Zusätzlich kann an der Vorderseitenwand 35 ein Verstärkungsabschnitt 48 vorgesehen sein, welcher eine geringfügige Materialanhäufung darstellt und auf diese Weise den die Zugspannungen aufweisenden Wandquerschnitt der Einarmschwinge 1 erhöht und somit das Zugspannungsniveau reduziert.

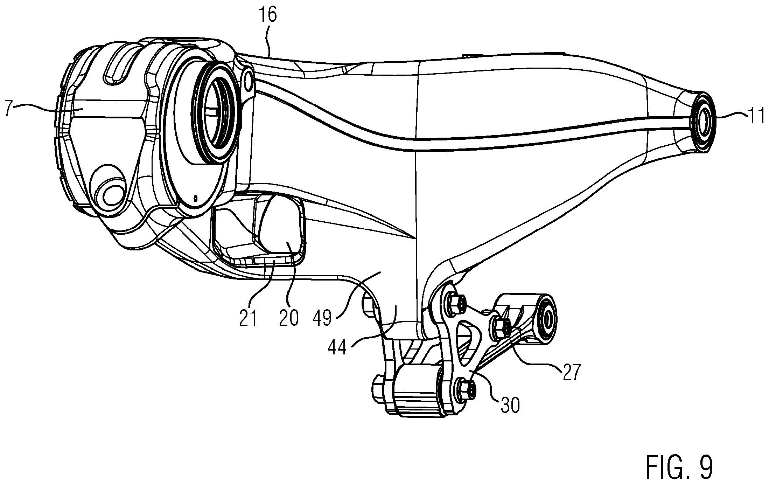

In hierzu ähnlicher Weise weist die Aufnahme 44, wie sich dies anhand von Fig. 9 der Zeichnung ergibt, einen weitgehend tangential verlaufenden Übergangsbereich in eine Rückseitenwand 49 der Einarmschwinge 1 auf, welche dem Zwischenraum 26 gegenüberliegt und auf diese Weise wird das in die Aufnahme 44 eingetragene Lastkollektiv der Federdämpferkräfte insgesamt weitgehend in der Form von Zugspannungen in die Einarmschwinge 1 eingeleitet.

Wie es sich ebenfalls anhand von Fig. 7 und Fig. 9 der Zeichnung ergibt, besitzt die Einarmschwinge 1 im Bereich des Verbindungsabschnitts 31 eine sich von einer oberen Deckseitenwand 50 des Verbindungsabschnitts 31 ausgehend in Richtung einer Längsachse 51 betrachtet eine V-förmige Konfiguration, welche einerseits dazu beiträgt, dass über die Aufnahme 44 in die Einarmschwinge 1 eingetragene Spannungen homogen in den Verbindungsabschnitt 31 eingetragen werden und andererseits der Schubmittelpunkt "S2" der erfindungsgemäßen Einarmschwinge 1 in Richtung näher zur Radaufstandsebene 52 verschoben werden kann und auf diese Weise der Hebelarm zwischen dem Radaufstandspunkt "RA" des Hinterrads 5 und dem Schubmittelpunkt "S2" der erfindungsgemäßen Einarmschwinge 1 verringert werden kann.

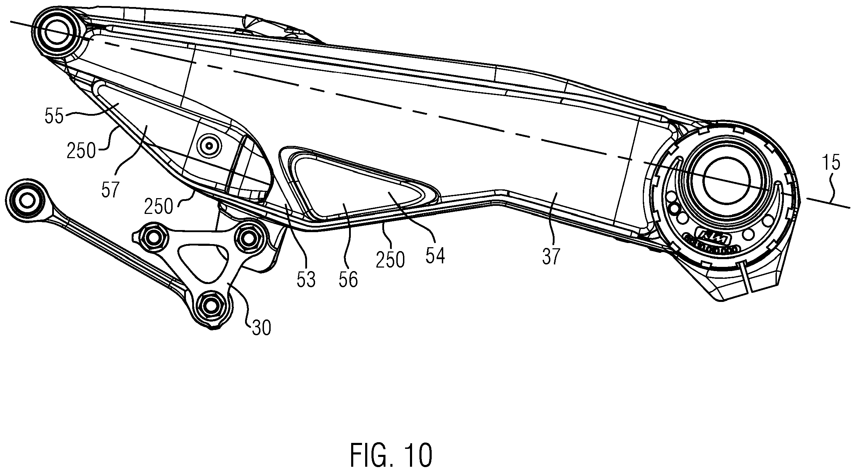

Fig. 10 der Zeichnung zeigt eine Seitenansicht der erfindungsgemäßen Einarmschwinge 1 nach einer Ausführungsform.

Wie es ohne weiteres ersichtlich ist, weist die Unterseitenwand 25 mehrere im Winkel zur Schwingenmittenebene 15 ausgerichtete Abschnitte 250 auf und, wie sich dies anhand von Fig. 8 der Zeichnung erschließt, sind die Abschnitte 250 der Unterseitenwand 25 mit dem Versteifungsgurt 20 einstückig verbunden, sodass sich eine torsionssteife Konfiguration einstellt. Die Außenseitenwand 37 besitzt einen Stegabschnitt 53, welcher mit der Unterseitenwand 25 einstückig verbunden ist und über Ausnehmungen 54, 55 im Bereich der Außenseitenwand 37 wird eine Reduzierung der Eigenmasse der erfindungsgemäßen Einarmschwinge 1 erreicht, wobei die Unterseitenwand 25 mit dünnwandigen Verbindungsabschnitten 56, 57 einstückig mit dem Schwingenarm 16 ausgebildet ist.

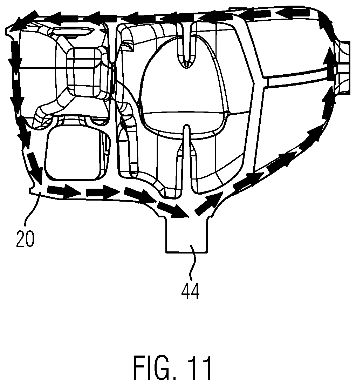

Nachfolgend wird auf Fig. 11 der Zeichnung Bezug genommen, die eine Querschnittsansicht darstellt und zwar aus der Sicht des ersten Abschnitts 7 in Richtung zu den zweiten Abschnitten 11 aus betrachtet.

Wie es ohne weiteres ersichtlich ist, ist die Aufnahme 44 mit ihren tangentialen Übergängen zur Vorderseitenwand 35 und zur Rückseitenwand 49 in die Lastaufnahmestruktur der erfindungsgemäßen Einarmschwinge 1 integriert und über die dargestellten Pfeile wird der Kraftfluss bei Torsionsbelastung der erfindungsgemäßen Einarmschwinge 1 deutlich. Insbesondere macht diese Fig. 11 auch deutlich, dass der Versteifungsgurt 20 in die Lastaufnahmestruktur eingebunden ist und zur Aufnahme der Torsionsbelastung wesentlich beiträgt.

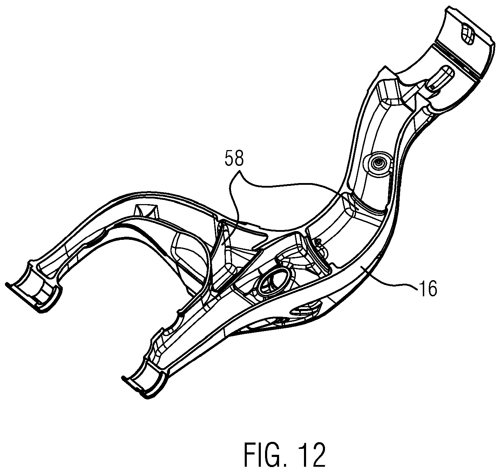

Fig. 12 der Zeichnung zeigt, dass die Einarmschwinge 1 insbesondere im Bereich des Schwingenarms 16 und des ersten Armabschnitts 32 weitgehend vertikal angeordnete Versteifungsstreben 58 besitzt, welche die Lastaufnahmefähigkeit der Einarmschwinge 1 erhöhen. Diese Streben 58 ermöglichen zusätzlich eine wesentlich einfachere Fertigung der Einarmschwinge 1, da dadurch das Profil mittels des Einsatzes nur zweier Kerne im Gießwerkzeug hergestellt werden kann im Vergleich zur Notwendigkeit der Verwendung dreier Kerne bei dem Einsatz einer horizontal verlaufenden Strebe in einer bekannten Schwinge.

Fig. 14 der Zeichnung schließlich zeigt die Radaufstandsebene 52 und das darauf über das Vorderrad 4 und Hinterrad 5 abgestützte Motorrad 3, welches in der Zeichnung stilisiert dargestellt ist und einen Rahmen 13 aufweist, an dem sich die erfindungsgemäße Einarmschwinge 1 über die beiden vorderen Abschnitte 11 verschwenkbar abstützt, während sich die Umlenkung 30 über den Ausleger 27 an dem schematisch dargestellten Antriebsmotor 6 abstützt.

Die Federdämpfereinrichtung 47 ist mit dem unteren Auge 28 an der Aufnahme 29 abgestützt und mit dem oberen Auge 61 an einem zum Rahmen 13 gehörigen Ausleger 62.

Die erfindungsgemäße Einarmschwinge ermöglicht eine wesentliche Absenkung des Schubmittelpunkts der Schwinge und damit einhergehend eine Verringerung der von der Seitenkraft des Hinterrads auf die Schwinge einwirkenden Torsionsbelastung, was wiederum dazu führt, dass die im Aufbau der Einarmschwinge wirkenden Torsionsspannungen bei im Vergleich zur bekannten Einarmschwinge angenommener gleichbleibender Wandstärke deutlich abnehmen, was wiederum dazu genutzt werden kann, die Wandstärke der erfindungsgemäßen Einarmschwinge verglichen mit der Wandstärke der bekannten Einarmschwinge zu verringern. Auf diese Weise wird auch eine Verringerung der Eigenmasse der erfindungsgemäßen Einarmschwinge verglichen mit der bekannten Einarmschwinge erzielt.

Über die Integration einer Aufnahme in die Struktur der Einarmschwinge im Bereich der Unterseite der Einarmschwinge kann das geometrische Progressionsverhältnis der Federdämpferkinematik deutlich erhöht werden, was auch insbesondere dazu genutzt werden kann, den Arbeitsweg des Arbeitskolbens im Federdämpferelement bei zunehmendem Radhub des Hinterrads progressiv ansteigen zu lassen, wodurch die Abstimmbarkeit der Dämpferarbeit verbessert werden kann.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

- 1.: Einarmschwinge
- 2.: Kette
- 3.: Motorrad
- 4.: Vorderrad
- 5.: Hinterrad
- 6.: Antriebsmotor
- 7.: erster Abschnitt
- 8.: Ausnehmung
- 9.: Aufnahme
- 10.: geometrischer Mittelpunkt
- 11.: Zweite Abschnitte
- 12.: Strukturbauteil
- 13.: Rahmen
- 14.: geometrischer Mittelpunkt
- 15.: Schwingenmittenebene
- 16.: Schwingenarm
- 17.: Oberseite
- 18.: erster Seitenwandbereich
- 19.: zweiter Seitenwandbereich
- 20.: Versteifungsgurt
- 21.: Durchtritt
- 22.: Fahrbahnoberfläche
- 23.: Schubmittelpunktsebene
- 24.: Deckseitenwand
- 25.: Unterseite
- 26.: Zwischenraum
- 27.: Ausleger
- 28.: unteres Federbeinauge
- 29.: Ausnehmung
- 30.: Umlenkung
- 31.: Verbindungsabschnitt
- 32.: Erster Armabschnitt
- 33.: Zweiter Armabschnitt
- 34.: Abschnitt
- 35.: Vorderseitenwand
- 36.: Obere Deckseitenwand
- 37.: Außenseitenwand
- 38.: Wandabschnitt
- 39.: Unterer Bereich
- 40.: Fläche
- 41.: Längsmittenebene
- 42.: Oberseite
- 43.: Unterer Wandbereich
- 44.: Aufnahme
- 45.: Unterseite
- 46.: Hebelumlenkung
- 47.: Federdämpfereinrichtung
- 48.: Verstärkungsgurt
- 49.: Rückseitenwand
- 50.: Deckseitenwand
- 51.: Längsachse
- 52.: Radaufstandsebene
- 53.: Stegabschnitt
- 54.: Ausnehmung
- 55.: Ausnehmung
- 56.: Verbindungsabschnitt
- 57.: Verbindungsabschnitt
- 58.: Versteifungsstrebe

- 61.: Auge
- 62.: Ausleger

- 160.: Linie
- 250.: Abschnitte

- S1.: Schubmittelpunkt
- S2.: Schubmittelpunkt
- LH.: Langer Hebelarm
- KH.: Kurzer Hebelarm
- RA.: Radaufstandspunkt
- F.: Seitenkraft
- H.: Hochachsrichtung

## Patentansprüche

1. Einarmschwinge (1) für ein Motorrad (3) mit einem Zugmittel (2) zum Antrieb eines Hinterrads (5) des Motorrads (3), wobei die Einarmschwinge (1) einen ersten Abschnitt (7) zur drehbar gelagerten Aufnahme des Hinterrads (5) und zweite Abschnitte (11) zur verschwenkbaren Festlegung der Einarmschwinge (1) an einem Strukturbauteil (12) des Motorrads (3) besitzt, wobei geometrische Mittelpunkte (10, 14) des ersten Abschnitts (7) und der zweiten Abschnitte (11) eine virtuelle Schwingenmittenebene (15) aufspannen, und zwischen dem ersten und den zweiten Abschnitten ein eine Oberseite (17) aufweisender Schwingenarm (16) vorgesehen ist, der einen ersten Seitenwandbereich (18) und einen diesem weitgehend gegenüberliegenden zweiten Seitenwandbereich (19) aufweist und sich der zweite Seitenwandbereich (19) bis in den Bereich eines zweiten Abschnitts (11) erstreckt und die beiden Seitenwandbereiche (18, 19) mit einem zum Durchtritt des Zugmittels (3) ausgebildeten Versteifungsgurt (20) verbunden sind, **dadurch gekennzeichnet, dass** sich der Versteifungsgurt (20) bis in einen Bereich unterhalb der Schwingenmittenebene (15) erstreckt.

2. Einarmschwinge (1) nach Anspruch 1, **dadurch gekennzeichnet, dass** der Schwingenarm (16) eine sich vom ersten Abschnitt (7) in Richtung zum zweiten Abschnitt (11) in einer gekrümmten Konfiguration erstreckende Ausbildung aufweist und die Oberseite (17) eine weitgehend parallel zur Schwingenmittenebene (15) angeordnete obere Deckseitenwand (24) aufweist.

3. Einarmschwinge (1) nach Anspruch 1 oder 2, **dadurch gekennzeichnet, dass** der Schwingenarm (16) eine zumindest abschnittsweise im Winkel zur Schwingenmittenebene (15) verlaufende Unterseitenwand (25) aufweist, welche zumindest abschnittsweise mit dem Versteifungsgurt (20) verbunden ist.

4. Einarmschwinge (1) nach einem der vorstehenden Ansprüche, **dadurch gekennzeichnet, dass** die beiden zweiten Abschnitte (11) im lichten Abstand zueinander angeordnet sind und einen Zwischenraum (26) ausbilden und sich ein Verbindungsabschnitt (31) von einem ersten der beiden zweiten Abschnitte (11) in Richtung zu dem zweiten der beiden zweiten Abschnitte (11) erstreckt und der Verbindungsabschnitt (31) vom jeweiligen zweiten Abschnitt (11) ausgehend einen jeweiligen Armabschnitt (32, 33) besitzt und die Armabschnitte (32, 33) mittels eines gekrümmt verlaufenden Abschnitts (34) miteinander verbunden sind und der gekrümmt verlaufende Abschnitt (34) den Zwischenraum (26) mit einer den beiden zweiten Abschnitten (11) zugewandten Vorderseitenwand (35) begrenzt.

5. Einarmschwinge (1) nach Anspruch 4, **dadurch gekennzeichnet, dass** ein dem zweiten Seitenwandbereich (19) zugeordneter Armabschnitt eine obere Deckseitenwand (36) aufweist, welche weitgehend parallel zur Schwingenmittenebene (15) angeordnet ist und eine sich in Richtung zum Schwingenarm (16) in einer Draufsichtansicht erweiternde Konfiguration besitzt.

6. Einarmschwinge (1) nach einem der vorstehenden Ansprüche, **dadurch gekennzeichnet, dass** der erste Seitenwandbereich (18) eine sich von dem ersten Abschnitt (7) in Richtung zu einem zweiten Abschnitt (11) erstreckende Außenseitenwand (37) aufweist, welche weitgehend eben ausgebildet ist und der Schwingenarm (16) vom zweiten Abschnitt (11) ausgehend eine sich in Richtung zum Verbindungsabschnitt (31) querschnittlich erweiternde Konfiguration aufweist.

7. Einarmschwinge (1) nach einem der Ansprüche 3 bis 6, **dadurch gekennzeichnet, dass** der Schwingenarm (16) vom ersten Abschnitt (7) ausgehend in Richtung zum Verbindungsabschnitt (31) in einer Draufsichtansicht eine sich erweiternde Konfiguration aufweist.

8. Einarmschwinge (1) nach einem der vorstehenden Ansprüche, **dadurch gekennzeichnet, dass** der zweite Seitenwandbereich (33) einen sich von zweiten Abschnitt (11) ausgehend weitgehend im rechten Winkel zur Oberseite nach unten gerichtet erstreckenden Wandabschnitt (38) aufweist, welcher im unteren Endbereich mit dem Versteifungsgurt (20) einstückig verbunden ist und in Richtung zum anderen zweiten Abschnitt (11) eine gekrümmte Konfiguration aufweist.

9. Einarmschwinge (1) nach einem der vorstehenden Ansprüche, **dadurch gekennzeichnet, dass** der Versteifungsgurt (20) vom ersten Seitenwandbereich (18) ausgehend eine sich in Richtung zu einer axialen Längsmittenebene (41) der Einarmschwinge (1) erstreckende Konfiguration aufweist und der Versteifungsgurt (20) mit einem der Oberseite des Schwingenarms gegenüber liegenden unteren Wandbereich (39) der Einarmschwinge (1) einstückig ausgebildet ist.

10. Einarmschwinge (1) nach einem der vorstehenden Ansprüche, **dadurch gekennzeichnet, dass** die Einarmschwinge (1) einen unterhalb der Schwingenmittenebene (15) liegenden Schubmittelpunkt (S2) besitzt.

11. Einarmschwinge (1) nach einem der vorstehenden Ansprüche, **dadurch gekennzeichnet, dass** die Einarmschwinge (1) an einem der Oberseite gegenüberliegenden Unterseitenbereich eine mit der Einarmschwinge (1) einstückig ausgebildete Aufnahme (44) zur lösbaren Festlegung einer Federdämpfereinrichtung (47) aufweist.

12. Einarmschwinge (1) nach Anspruch 11, **dadurch gekennzeichnet, dass** sich die Aufnahme (44) von der Schwingenmittenebene (15) aus betrachtet in Richtung nach unten erstreckt.

13. Einarmschwinge (1) nach Anspruch 11 oder 12, **dadurch gekennzeichnet, dass** die Aufnahme (44) einen in Richtung einer Längsmittenachse der Einarmschwinge (1) ausgerichteten Vorderseitenbereich aufweist, welcher einen näherungsweise tangentialen Übergang zur Vorderseitenwand (35) des Zwischenraums (26) besitzt.

14. Einarmschwinge (1) nach einem der Ansprüche 11 bis 13, **dadurch gekennzeichnet, dass** die Aufnahme (44) einen in Richtung einer Längsmittelachse der Einarmschwinge (1) ausgerichteten Rückseitenbereich aufweist, welcher tangential in eine dem Zwischenraum (26) gegenüberliegende Rückseitenwand (49) der Einarmschwinge (1) übergeht.

15. Einarmschwinge (1) nach Anspruch 14, **dadurch gekennzeichnet, dass** die Einarmschwinge (1) im Bereich der Rückseitenwand (49) in Richtung der Längsachse der Einarmschwinge (1) betrachtet eine V-förmige Konfiguration aufweist.

16. Motorrad (3) mit einem Vorderrad (4) und einem Hinterrad (5), **gekennzeichnet durch** eine Einarmschwinge (1) nach einem der vorstehenden Ansprüche.

## Claims

1. Single-sided swingarm (1) for a motorcycle (3) having traction means (2) for driving a rear wheel (5) of the motorcycle (3), wherein the single-sided swingarm (1) has a first portion (7) for receiving the rear wheel (5) in a rotatably mounted manner and second portions (11) for pivotably fixing the single-sided swingarm (1) on a structural component (12) of the motorcycle (3), wherein geometric central points (10, 14) of the first portion (7) and the second portions (11) span a virtual swinging central plane (15), and a swinging arm (16) having a upper side (17) is provided between the first and the second portions, said swinging arm having a first side wall region (18) and a second side wall region (19) extensively lying opposite this, and the second side wall region (19) extends up to the region of a second portion (11), and the two side wall regions (18, 19) are connected to a stiffening girder (20) formed for passing through the traction means (3), **characterised in that** the stiffening girder (20) extends up to a region below the swinging central plane (15).

2. Single-sided swingarm (1) according to claim 1, **characterised in that** the swinging arm (16) has a formation extending in a curved configuration from the first portion (7) in the direction of the second portion (11), and the upper side (17) has an upper cover side wall (24) arranged extensively in parallel to the swinging central plane (15).

3. Single-sided swingarm (1) according to claim 1 or 2, **characterised in that** the swinging arm (16) has an under side wall (25) running at least portionally at an angle to the swinging central plane (15), said under side wall being connected at least portionally to the stiffening girder (20).

4. Single-sided swingarm (1) according to one of the preceding claims, **characterised in that** the two second portions (11) are arranged with a clearance to each other and form an intermediary space (26), and a connection portion (31) extends from a first of the two second portions (11) in the direction of the second of the two second portions (11), and the connection portion (31) has a respective arm portion (32, 33) starting from the respective second portion (11), and the arm portions (32, 33) are connected to each other by means of a portion (34) running in a curved shape, and the portion (34) running in a curved shape delimits the intermediary space (26) with a front side wall (35) facing towards the two second portions (11).

5. Single-sided swingarm (1) according to claim 4, **characterised in that** an arm portion allocated to the second side wall region (19) has an upper cover side wall (36) which is arranged extensively in parallel to the swinging central plane (15) and has a configuration widening in the direction of the swinging arm (16) in a plan view.

6. Single-sided swingarm (1) according to one of the preceding claims, **characterised in that** the first side wall region (18) has an outer side wall (37) extending from the first portion (7) in the direction of a second portion (11), said outer side wall being formed extensively flatly, and the swinging arm (16) has a configuration expanding cross-sectionally in the direction of the connection portion (31) starting from the second portion (11).

7. Single-sided swingarm (1) according to one of claims 3 to 6, **characterised in that** the swinging arm (16) has an expanding configuration starting from the first portion (7) in the direction of the connection portion (31) in a plan view.

8. Single-sided swingarm (1) according to one of the preceding claims, **characterised in that** the second side wall region (33) has a wall portion (38) extending starting from the second portion (11) extensively at a right angle to the upper side directed downwards, said wall portion being integrally connected to the stiffening girder (20) in the under end region and having a curved configuration in the direction of the other second portion (11).

9. Single-sided swingarm (1) according to one of the preceding claims, **characterised in that** the stiffening girder (20) has a configuration extending in the direction of an axial longitudinal central plane (41) of the single-sided swingarm (1) starting from the first side wall region (18), and the stiffening girder (20) is formed integrally with a lower wall region (39), lying opposite the upper side of the swinging arm, of the single-sided swingarm (1).

10. Single-sided swingarm (1) according to one of the preceding claims, **characterised in that** the single-sided swingarm (1) has a thrust central point (S2) lying below the swinging central plane (15).

11. Single-sided swingarm (1) according to one of the preceding claims, **characterised in that**, on a lower side region lying opposite the upper side, the single-sided swingarm (1) has a receiver (44) integrally formed with the single-sided swingarm (1) for releasably fixing a spring damper device (47).

12. Single-sided swingarm (1) according to claim 11, **characterised in that** the receiver (44) extends in the downward direction when viewed from the swinging central plane (15).

13. Single-sided swingarm (1) according to claims 11 or 12, **characterised in that** the receiver (44) has a front side region aligned in the direction of a longitudinal central axis of the single-sided swingarm (1), said front side region having a virtually tangential transition to the front side wall (35) of the intermediary space (26).

14. Single-sided swingarm (1) according to one of claims 11 to 13, **characterised in that** the receiver (44) has a rear side region aligned in the direction of a longitudinal central axis of the single-sided swingarm (1), said rear side region transitioning tangentially into a rear side wall (49), lying opposite the intermediary space (26), of the single-sided swingarm (1).

15. Single-sided swingarm (1) according to claim 14, **characterised in that**, in the region of the rear side wall (49), the single-sided swingarm (1) has a V-shaped configuration when viewed in the direction of the longitudinal axis of the single-sided swingarm (1).

16. Motorcycle (3) having a front wheel (4) and a rear wheel (5), **characterised by** a single-sided swingarm (1) according to one of the preceding claims.

## Revendications

1. Bras oscillant unilatéral (1) destiné à une motocyclette (3) avec un dispositif de traction (2) permettant l'entraînement d'une roue arrière (5) de la motocyclette (3), où le bras oscillant unilatéral (1) possède une première partie (7), permettant la réception de la roue arrière (5), logée en pouvant tourner, et des deuxièmes parties (11), permettant une fixation pivotante du bras oscillant unilatéral (1) sur un composant de structure (12) de la motocyclette (3), dans lequel des centres de convergence géométriques (10, 14) de la première partie (7) et des deuxièmes parties (11) forment un plan central d'oscillation (15) virtuel, et entre la première et les deuxièmes parties, il est prévu un bras oscillant (16), présentant une face supérieure (17), lequel présente une première zone de cloison latérale (18) et une deuxième zone de cloison latérale (19) située largement à l'opposé de cette première zone, et la deuxième zone de cloison latérale (19) s'étend jusque dans la zone d'une deuxième partie (11), et les deux zones de cloison latérale (18, 19) sont reliées avec une ceinture de rigidification (20) formée pour le passage du dispositif de traction (3), **caractérisé en ce que** la ceinture de rigidification (20) s'étend jusque dans une zone en-dessous du plan central d'oscillation (15).

2. Bras oscillant unilatéral (1) selon la revendication 1, **caractérisé en ce que** le bras oscillant (16) présente une structure s'étendant dans une configuration incurvée à partir de la première partie (7) en direction de la deuxième partie (11), et la face supérieure (17) présente une cloison latérale de couverture (24) supérieure disposée largement de manière parallèle par rapport au plan central d'oscillation (15).

3. Bras oscillant unilatéral (1) selon la revendication 1 ou la revendication 2, **caractérisé en ce que** le bras oscillant (16) présente une cloison latérale inférieure (25), s'étendant au moins par endroits avec un angle par rapport au plan central d'oscillation (15), laquelle est reliée au moins par endroits avec la ceinture de rigidification (20).

4. Bras oscillant unilatéral (1) selon l'une des revendications précédentes, **caractérisé en ce que** les deux deuxièmes parties (11) sont disposées avec un léger écart l'une par rapport à l'autre et forment un espace intermédiaire (26), et une partie de connexion (31) s'étend à partir d'une première des deux deuxièmes parties (11) en direction de la deuxième des deux deuxièmes parties (11), et la partie de connexion (31) possède un segment de bras (32, 33) respectif partant de la deuxième partie (11) respective, et les segments de bras (32, 33) sont reliés ensemble au moyen d'une partie (34) s'étendant de manière incurvée, et la partie (34) s'étendant de manière incurvée délimite l'espace intermédiaire (26) avec une cloison latérale avant (35) orientée vers les deux deuxièmes parties (11).

5. Bras oscillant unilatéral (1) selon la revendication 4, **caractérisé en ce qu'**un segment de bras associé à la deuxième zone de cloison latérale (19) présente une cloison latérale de couverture (36), laquelle est disposée largement de manière parallèle par rapport au plan central d'oscillation (15) et possède une configuration s'élargissant en direction du bras oscillant (16), dans une vue plongeante.

6. Bras oscillant unilatéral (1) selon l'une des revendications précédentes, **caractérisé en ce que** la première zone de cloison latérale (18) présente une cloison latérale extérieure (37) s'étendant à partir de la première partie (7) en direction d'une deuxième partie (11), laquelle est conçue largement de manière plane, et le bras oscillant (16) présente une configuration s'élargissant dans sa section transversale en partant de la deuxième partie (11) en direction de la partie de connexion (31).

7. Bras oscillant unilatéral (1) selon l'une des revendications 3 à 6, **caractérisé en ce que** le bras oscillant (16) présente une configuration s'élargissant en partant de la première partie (7) en direction de la partie de connexion (31), dans une vue plongeante.

8. Bras oscillant unilatéral (1) selon l'une des revendications précédentes, **caractérisé en ce que** la deuxième zone de cloison latérale (33) présente une partie de cloison (38) s'étendant orientée vers le bas en partant de la deuxième partie (11) avec un angle essentiellement droit par rapport à la face supérieure, laquelle est reliée d'un seul tenant avec la ceinture de rigidification (20) dans la zone d'extrémité inférieure et présente une configuration incurvée en direction de l'autre deuxième partie (11).

9. Bras oscillant unilatéral (1) selon l'une des revendications précédentes, **caractérisé en ce que** la ceinture de rigidification (20) présente une configuration s'étendant à partir de la première zone de cloison latérale (18) en direction d'un plan central longitudinal (41) axial du bras oscillant (1) et la ceinture de rigidification (20) est conçue d'un seul tenant avec une zone de cloison (39) inférieure du bras oscillant unilatéral (1) se situant en face de la face supérieure du bras oscillant.

10. Bras oscillant unilatéral (1) selon l'une des revendications précédentes, **caractérisé en ce que** le bras oscillant unilatéral (1) possède un centre de cisaillement (S2) se situant en-dessous du plan central d'oscillation (15).

11. Bras oscillant unilatéral (1) selon l'une des revendications précédentes, **caractérisé en ce que** le bras oscillant unilatéral (1) présente un logement (44) conçu d'un seul tenant avec le bras oscillant unilatéral (1) sur une zone latérale inférieure se situant en face de la face supérieure pour la fixation amovible d'un dispositif d'amortissement élastique (47).

12. Bras oscillant unilatéral (1) selon la revendication 11, **caractérisé en ce que** le logement (44) s'étend vers le bas, vu à partir du plan central d'oscillation (15).

13. Bras oscillant unilatéral (1) selon la revendication 11 ou la revendication 12, **caractérisé en ce que** le logement (44) présente une zone latérale avant orientée en direction d'un axe central longitudinal du bras oscillant unilatéral (1), laquelle possède un passage à peu près tangentiel vers la cloison latérale avant (35) de l'espace intermédiaire (26).

14. Bras oscillant unilatéral (1) selon l'une des revendications 11 à 13, **caractérisé en ce que** le logement (44) présente une zone latérale arrière orientée en direction d'un axe central longitudinal du bras oscillant unilatéral (1), laquelle dépasse du bras oscillant unilatéral (1) de manière tangentielle dans une cloison latérale arrière (49) située en face de l'espace intermédiaire (26).

15. Bras oscillant unilatéral (1) selon la revendication 14, **caractérisé en ce que** le bras oscillant unilatéral (1) présente dans la zone de la cloison latérale arrière (49) une configuration en forme de V, vu en direction de l'axe longitudinal du bras oscillant unilatéral (1).

16. Motocyclette (3) avec une roue avant (4) et une roue arrière (5), **caractérisée par** un bras oscillant unilatéral (1) selon l'une des revendications précédentes.
